# FASCICULE DE BREVET EUROPEEN

(11) **EP 3 826 760 B1**
(45) Date de publication et mention de la délivrance du brevet: **11.10.2023**
(21) Numéro de dépôt: 19742047.4
(22) Date de dépôt: 19.07.2019
(51) Int. Cl.: B01J 8/00, B01J 8/02

(54) **DISPOSITIF DE FILTRATION POUR UN REACTEUR A CO-COURANT DESCENDANT DE FLUIDE**
FILTERVORRICHTUNG FÜR EINEN GLEICHSTROM-ABWÄRTSSTROMREAKTOR
FILTRATION DEVICE FOR A CO-CURRENT DOWNFLOW REACTOR

(30) Priorité: 23.07.2018 FR 1856811
(43) Date de publication de la demande: 02.06.2021
(73) Titulaire: TotalEnergies OneTech, 92400 Courbevoie (FR)
(72) Inventeur: ORLEWSKI, Jacques, 27210 BEUZEVILLE (FR); NASCIMENTO, Pedro, 76620 LE HAVRE (FR); TCHOKETCH-KEBIR, Robert, 92150 SURESNES (FR)
(74) Mandataire: Largeau, Béatrice
(86) Numéro de dépôt international: PCT/EP2019/069586
(87) Numéro de publication internationale: WO 2020/020794

(56) Documents cités:
- FR-A- 1 495 081
- US-A- 3 006 740
- US-A- 3 584 685
- US-A- 4 239 614

## Description

La présente invention se rapporte au domaine des réacteurs à lit(s) catalytique(s) fixe(s) alimentés par des fluides, liquides et gazeux, pouvant fonctionner à co-courant descendant.

On rencontre de tels réacteurs dans les réactions d'hydrogénation sélective de diverses coupes pétrolières, et plus généralement dans les hydrotraitements qui nécessitent des flux d'hydrogène sous pression élevée et des charges fluides lourdes (c'est à dire qui restent au moins en partie liquides dans les conditions de fonctionnement du réacteur).

Afin de faciliter les mélanges thermiques ou physiques des fluides liquides et gazeux introduits à co-courant, on peut prévoir un plateau de distribution entre une entrée de fluide et le lit catalytique.

Un plateau de distribution comprend un (ou plusieurs) élément de plaque perforé d'orifices, dont les bords peuvent être prolongés, ou non, en des cheminées s'étendant vers l'entrée de fluide.

Les documents FR2878766 et WO2013/017804 décrivent des exemples de plateaux de distribution.

Néanmoins, les charges liquides lourdes peuvent contenir des impuretés, et notamment des particules solides ou visqueuses, par exemple des gommes, des particules de coke, des particules métalliques, des écailles de sulfure de fer, ou autre, susceptibles de conduire à des colmatages.

Des impuretés peuvent se déposer sur le lit catalytique en aval du plateau, ce qui peut amener au fil du temps à une réduction du volume interstitiel du lit catalytique et à des problèmes de perte de charge. Ces colmatages peuvent imposer à terme un traitement ou un remplacement du lit catalytique.

Il est connu de disposer en amont du lit catalytique un filtre pour recueillir les impuretés. Ce filtre, par exemple en amont du plateau distributeur, peut être installé à l'intérieur du réacteur, ou bien encore en amont du réacteur.

A titre d'exemple, on peut citer le document US 3,958,952 ou encore US 3,006,740, ce dernier document décrivant un filtre présentant des dépressions pénétrant la surface du lit de catalyseur afin d'augmenter la surface d'échange avec le catalyseur.

Le document WO2016/110394 décrit un autre exemple de plateau de filtration, définissant des bassins pour favoriser la sédimentation, à prévoir en amont du plateau de distribution.

Le document US7,157,013 décrit un exemple de filtre à impuretés pour réacteurs à lit catalytique, ce filtre étant réalisé en un matériau céramique extrudé.

Toutefois, ces plateaux de filtration sont relativement encombrants, et leur remplacement, relativement fréquent, peut être assez complexe à mener.

Il existe donc un besoin pour un dispositif permettant de concilier contraintes moindres et protection contre les impuretés.

Il est proposé un dispositif de filtration de particules pour un réacteur, ledit réacteur définissant une entrée de fluide, recevant un lit granulaire et étant équipé d'un plateau de distribution comprenant au moins un élément de plaque entre ladite entrée de fluide et ledit lit granulaire, chaque élément de plaque définissant des orifices pour l'écoulement du fluide vers le lit granulaire, le plateau de distribution étant dimensionné et disposé à l'intérieur du réacteur de sorte que les fluides introduits par ladite entrée de fluide soient contraints de passer par lesdits orifices du plateau pour atteindre ledit lit granulaire,
le dispositif de filtration comprenant au moins un organe de filtration perméable au fluide tout en retenant d'éventuelles particules entrainées par le fluide,
dans lequel le dispositif de filtration est agencé pour être installé sur le plateau de distribution, par exemple posé sur ou fixé au plateau de distribution.

Ainsi, plutôt que de prévoir un étage de filtrage en supplément du plateau de distribution, et fixé au réacteur, comme dans l'art antérieur, on vient installer sur le plateau de distribution un ou plusieurs dispositifs de filtration. Il n'est ainsi plus nécessaire de prévoir un système de fixation au réacteur du dispositif de filtration, ce système de fixation étant dimensionné en fonction des dimensions du réacteur, permettant ainsi de simplifier fabrication et logistique tout en assurant un filtrage.

L'installation et le retrait des dispositifs de filtration peuvent en outre être plus simples et/ou plus rapides à mener que dans l'art antérieur.

Le plateau de distribution peut comprendre un seul élément de plaque, ou bien encore plusieurs éléments de plaque, par exemple plusieurs éléments de plaque superposés ou alternativement dans un même plan.

Avantageusement, le dispositif de filtration est agencé pour être installé sur le plateau de distribution de sorte que ledit au moins organe de filtration soit sur un chemin possible, avantageusement un chemin préféré compte tenu de divers paramètres, notamment de la gravité, d'écoulement de fluide vers ou depuis un jeu correspondant d'au moins un orifice de l'élément de plaque.

L'élément de plaque présente une face dite amont en regard de l'entrée de fluide, et une face opposée, dite aval, en regard du lit granulaire.

L'invention n'est pas limitée par la façon dont le dispositif de filtration est installé sur le plateau de distribution. Le dispositif de filtration peut par exemple être simplement posé sur l'élément de plaque ou bien encore comprendre un organe de fixation coopérant avec le plateau de distribution, par exemple :
- une bride définissant un orifice pour une fixation par vissage dans un orifice du plateau de distribution - on vient ainsi profiter des orifices du plateau de distribution pour installer un filtre sur ce plateau,
- une tige ou un cylindre, destiné(e) à être reçu(e) dans une cheminée et/ou un orifice du plateau de distribution, permettant ainsi une meilleure tenue dans le temps que lorsque le dispositif de filtration est simplement posé sur le plateau de distribution,
- ou autre.

Avantageusement et de façon non limitative, une partie au moins du dispositif de filtration peut être reçue dans un orifice correspondant.

On peut ainsi prévoir d'installer le dispositif de filtration sur le plateau distributeur en insérant tout ou partie du dispositif de filtration dans un orifice de l'élément de plaque.

Cette partie du dispositif de filtration peut avantageusement être cylindrique, avec une base ayant une forme complémentaire de celle de l'orifice, avantageusement sans jeu ou avec un jeu définissant un passage de section inférieure à 1 cm², avantageusement inférieure à 1 mm².

Avantageusement et de façon non limitative, une partie au moins du dispositif de distribution peut comprendre des parois destinées à être disposées de sorte que leurs projections (suivant la normale à la face amont ou avant, ou bien suivant la direction globale d'écoulement) sur l'élément de plaque (ou tout au moins les projections de leurs bords les plus proches de la plaque) jouxtent ou entourent la ou les projection(s) (suivant la normale à la face amont ou avant, ou bien suivant la direction globale d'écoulement) sur l'élément de plaque d'un jeu d'au moins un orifice.

Ces parois peuvent être disposées à l'amont ou à l'aval du plateau.

Chaque dispositif de filtration peut correspondre à un orifice défini dans la plaque, ou à une pluralité de ces orifices, de sorte que les dimensions d'un dispositif de filtration peuvent être relativement faibles.

En outre, l'encombrement lié au filtrage peut être réduit par rapport à l'art antérieur.

Enfin, il peut être plus facile de fabriquer, stocker, transporter, etc. des dispositifs de filtration tels que décrits ci-dessus que les étages de filtration du type connu de l'art antérieur. La logistique liée à la filtration peut ainsi être simplifiée.

Le jeu d'orifices correspondant à un dispositif de filtration peut avantageusement comprendre un seul orifice, permettant ainsi de concevoir un dispositif de filtration relativement compact.

Alternativement, ce jeu peut comprendre deux orifices, trois orifices, voire la totalité des orifices du plateau de distribution (mais avantageusement cinq orifices ou moins).

On peut prévoir plusieurs fluides introduits à co-courant via l'entrée de fluide, par exemple au moins un gaz et un moins un liquide, ou bien encore seulement plusieurs gaz ou seulement plusieurs liquides, ou bien un seul fluide.

Le lit granulaire peut comprendre un lit catalytique, un lit de particules inertes, et/ou autre.

Le réacteur peut être équipé de plusieurs plateaux de distribution, en série les uns par rapport aux autres, auquel cas on pourra installer le(s) dispositif(s) de filtrage sur le plateau de distribution le plus proche d'une ouverture du réacteur ou sur un autre plateau, ou bien d'un seul plateau de distribution.

L'invention n'est pas limitée à une forme particulière des orifices du plateau de distribution. Ces orifices définissent dans l'épaisseur du plateau des conduits débouchant de part et d'autre de l'élément de plaque.

Ces conduits peuvent être rectilignes, par exemple s'étendre suivant une direction ayant une composante normale à un plan d'une au moins des surfaces de l'élément de plaque, par exemple avec une forme relativement cylindrique avec des génératrices normales à ce plan, ou bien encore obliques par rapport à ce plan.

Ces conduits être continus, par exemple arrondis, ou présenter des angles, etc., pourvu qu'ils définissent un chemin pour le fluide circulant depuis l'entrée de fluide vers le lit granulaire.

En particulier, le plateau de distribution peut comprendre des cheminées s'étendant au-delà de l'élément de plaque, avantageusement vers l'entrée de fluide, chaque cheminée définissant un canal en communication avec un conduit traversant l'élément de plaque.

Avantageusement et de façon non limitative, au moins une cheminée peut présenter des parois perforées d'un ou plusieurs trous, et/ou définissant des découpes de type fentes, s'étendant suivant une direction ayant une composante perpendiculaire au plan du plateau.

Avantageusement et de façon non limitative, au moins une cheminée peut définir une ouverture supérieure à une extrémité opposée à l'extrémité de raccordement au canal correspondant. Cette ouverture supérieure peut être destinée à l'écoulement d'un fluide léger, par exemple d'un gaz.

Avantageusement, les conduits correspondant aux orifices du plateau de distribution ont une section, normale ou sensiblement normale à la direction d'écoulement, suffisamment étendue pour laisser passer les particules. On limite ainsi le risque de colmatage des orifices et donc du plateau de distribution.

Par exemple au moins un conduit, dans ou autour duquel est installé un dispositif de filtration, peut avoir une section de diamètre ou de diamètre équivalent entre 5 mm et 50 mm, par exemple entre 10 mm et 40 mm. L'aire de cette section peut par exemple être comprise entre 30 mm² et 2000 mm², par exemple 70 mm² et 1300 mm².

Le dispositif de filtration peut comprendre un élément creux d'amont comprenant des parois latérales intégrant au moins une partie de cet au moins un organe de filtration, suffisamment distantes les unes des autres pour que lorsque cet élément creux est installé sur la face amont de l'élément de plaque du plateau de distribution, les projections (suivant la normale à la face amont ou avant, ou bien suivant la direction globale d'écoulement) des bords aval ou inférieurs de ces parois latérales (les bords les plus prés de la face amont de l'élément de plaque) sur la face amont de l'élément de plaque entourent les projections (suivant la normale à la face amont ou avant, ou bien suivant la direction globale d'écoulement) sur cette face amont des bords du au moins un orifice du jeu correspondant à ce dispositif de filtration.

Cet élément creux peut ainsi participer au filtrage en constituant un obstacle favorisant la sédimentation des particules sur l'élément de plaque.

L'élément creux d'amont peut avoir une forme de cylindre, à base polygonale, circulaire, elliptique ou autre, avec notamment une génératrice normale à la face amont et/ou aval, une forme tronconique, conique, ou autre.

Le dispositif de filtration peut comprendre un élément creux d'aval, comprenant des parois latérales intégrant au moins une partie de cet au moins un organe de filtration, suffisamment rapprochées pour que cet élément creux d'aval puisse être introduit via un orifice du jeu d'au moins un orifice correspondant à ce dispositif de filtration.

Les parois latérales de l'élément creux d'amont et/ou de l'élément creux d'aval peuvent comprendre un ou plusieurs organes de filtration, par exemple à forme de paroi. Les parois latérales peuvent comprendre en outre des parties pleines, ou non.

Alternativement, les parois latérales peuvent n'être constituées que de parties pleines.

L'élément creux d'amont peut comprendre une paroi formant couvercle, ou non.

La paroi formant couvercle peut être entièrement pleine, comprendre un ou plusieurs organes de filtration, n'être constituée que d'un organe de filtration, etc.

Dans le cas d'un conduit s'étendant en une cheminée, les parois latérales peuvent entourer la cheminée.

L'élément creux d'aval peut avantageusement comprendre en outre en outre une paroi de fond, s'étendant entre les parois latérales dans un plan normal à une direction ayant une composante suivant la direction d'écoulement, pour forcer le flux à passer par les parois latérales ou par un organe de filtration défini dans cet élément de fond.

L'élément creux d'aval peut par exemple définir au moins une butée formant un détrompeur pour une fixation de type quart de tour, notamment dans le cas où un dispositif de filtration ne correspond qu'à un seul orifice.

Le dispositif de filtration est agencé pour que lorsqu'installé sur le plateau de distribution, avantageusement dans le ou autour du jeu d'au moins un orifice correspondant, le colmatage par des impuretés de son au moins un organe de filtration laisse au moins un chemin pour le passage du fluide par ce jeu d'au moins un orifice. Dit autrement, même lorsque le dispositif de filtration est encrassé et saturé, le ou les fluides peuvent toujours circuler au travers du jeu correspondant d'au moins un orifice du plateau de distribution. Ceci permet d'éviter d'avoir à mettre fin à l'alimentation en fluide du seul fait de l'encrassage des filtres.

Le dispositif de filtration définit un jeu d'au moins une ouverture dimensionnée et disposée de façon à laisser passer le fluide lorsque ledit au moins un organe de filtration est colmaté par les impuretés.

Avantageusement, le jeu d'au moins une ouverture peut être agencé de sorte que l'aire de la au moins une section d'ouverture correspondante soit au moins aussi élevée que l'aire de la ou des section(s) du jeu d'orifice(s) correspondant à ce dispositif de filtration. Ainsi, le débit de circulation des fluides peut rester inchangé malgré le colmatage du ou des organes de filtration.

Ladite au moins une ouverture peut avantageusement présenter une aire comprise entre 10 mm² et 100000 mm², avantageusement entre 25 mm² et 40000 mm², par exemple entre 100 mm² et 10000 mm². Ladite au moins une ouverture peut avantageusement présenter un diamètre ou diamètre équivalent entre 5 mm et 200 mm, avantageusement entre 10 mm et 200 mm.

Par exemple, l'élément creux d'amont peut définir au moins une ouverture relativement large, par exemple de diamètre ou de diamètre équivalent entre 5 mm et 200 mm, avantageusement entre 10 mm et 200 mm, par exemple entre 5 et 50 mm, avantageusement entre 10 et 40 mm, afin de laisser passer les particules. Cette ouverture peut notamment être définie dans la paroi formant couvercle, ou bien encore l'élément creux d'amont peut être dénué de couvercle, afin de laisser passer les fluides chargés en impuretés lorsque les organes de filtration sont saturés. Cette ouverture peut être relativement haute afin de favoriser d'autres chemins pour le passage du fluide tant que les organes de filtration sont perméables au fluide.

L'élément creux d'amont peut dans un mode de réalisation être dénué de couvercle, et par exemple comprendre simplement un ensemble de parois latérales, cet ensemble étant conformé pour que, lorsque l'élément creux d'amont est installé sur la face amont de l'élément de plaque, les projections du bord inférieur de cet ensemble sur la face avant entourent les projections du jeu d'au moins un orifice correspondant à ce dispositif de filtration. Dit autrement, l'élément creux d'amont peut comprendre un ensemble de parois entourant le ou les orifices (et le ca échéant, la ou les cheminées), tout en étant ouvert sur le dessus.

Par exemple, l'élément creux d'aval peut définir une ouverture relativement large, par exemple de diamètre ou de diamètre équivalent entre 5 et 200 mm, par exemple entre 5 et 50 mm, avantageusement entre 10 et 40 mm, afin de laisser passer les particules. Cette ouverture peut être définie dans une paroi de fond et/ou dans des parois latérales. En particulier, cette ouverture pourra être relativement haute, par exemple à proximité de la face aval de l'élément de plaque.

Cette ouverture de l'élément creux d'aval peut avantageusement être plus haute qu'un organe de filtration de l'élément creux d'aval, de façon à privilégier le passage via cet organe de filtration des fluides les plus lourds.

Dans un autre mode de réalisation alternatif, le dispositif de filtration peut être agencé pour que lorsqu'installé sur le plateau de distribution, avantageusement dans le ou autour du jeu d'au moins un orifice correspondant, le colmatage par des impuretés de son au moins un organe de filtration empêche tout passage du fluide par cet orifice, permettant ainsi de limiter au mieux les dépôts d'impuretés sur le lit catalytique.

Dans un mode de réalisation, au moins un organe de filtration peut présenter une épaisseur relativement faible, par exemple entre 10 µm et 1 cm, de façon à s'inscrire pleinement dans une paroi d'un élément creux.

Avantageusement, au moins un organe de filtration peut définir des orifices dont la plus faible section sur un chemin de fluide présente un diamètre équivalent entre 10 µm et 1 cm, avantageusement entre 100 µm et 1 mm. L'aire de ces orifices de l'organe de filtration peut être par exemple entre 70 µm² et 3 cm², avantageusement entre 7000 µm² et 0,8 mm².

Avantageusement, au moins une partie du dispositif de filtration peut être réalisée en céramique, par exemple en céramique extrudée. La fabrication peut être relativement simple à mener, et on pourra obtenir relativement facilement des modèles dimensionnés en fonction des caractéristiques du réacteur auxquels ils sont destinés.

Avantageusement, au moins une partie du dispositif de filtration peut être réalisée en métal, par exemple en acier. Un filtre en métal peut être avantageux car susceptible d'être nettoyé relativement facilement, et donc réutilisable.

On pourra prévoir de recycler le(s) matériau(x) du dispositif de filtration.

On peut par exemple prévoir des grilles de filtration composées de fils entremêlés. Avantageusement, au moins un organe de filtration peut comprendre un maillage ou nid d'abeilles, avantageusement un maillage réalisé en céramique, en métal, ou autre.

On peut prévoir par exemple des mailles avec un diamètre équivalent variant entre 10 µm et 1 cm, avantageusement entre 100 µm et 1 mm.

Alternativement, on pourrait prévoir des orifices perforés dans une feuille, par exemple métallique, un matériau poreux perméable aux fluides et retenant des particules, ou autre.

Il est en outre proposé un ensemble comprenant un réacteur ledit réacteur définissant une entrée de fluide, recevant un lit granulaire et étant équipé d'un plateau de distribution comprenant un élément de plaque entre ladite entrée de fluide et ledit lit granulaire, ledit élément de plaque définissant des orifices pour l'écoulement du fluide vers le lit granulaire, le plateau de distribution étant dimensionné et disposé à l'intérieur du réacteur de sorte que les fluides introduits par ladite entrée de fluide soient contraints de passer par lesdits orifices du plateau pour atteindre ledit lit granulaire, ainsi que le dispositif de filtration décrit ci-dessus, installé sur le plateau de distribution.

Avantageusement, le dispositif de filtration et le plateau de distribution sont conformés pour que le dispositif de filtration soit installé sans jeu entre ledit dispositif et le plateau, ou avec un jeu définissant un passage de 1 cm² ou moins, avantageusement 5 mm² ou moins, avantageusement 1 mm² ou moins. Ainsi, la circulation de fluide entre le dispositif de filtration et le plateau de distribution, au niveau de parties coopérant entre elles pour assurer l'installation, estelle très limitée voire nulle. On peut par exemple poser un dispositif de filtration à forme générale de cylindre, à bords inférieur dans un même plan, sur un élément de plaque plan : la circulation de fluide entre le bord inférieur du dispositif de filtration et l'élément de plaque peut alors être très limitée. On peut aussi prévoir un organe de fixation sans jeu, par exemple que le dispositif de filtration comprenne un élément creux d'aval dont les parois latérales au niveau de l'orifice correspondant ont les mêmes dimensions extérieures, au jeu fonctionnel prés que les parois internes du conduit correspondant à cet orifice, empêchant ou limitant ainsi la circulation de fluide dans le conduit par un passage éventuel entre les parois de l'élément de plaque et le dispositif de filtration.

L'invention concerne également l'utilisation du dispositif de filtration tel que décrit ci-dessus dans un réacteur à lit(s) catalytique(s) fixe(s) alimentés par des fluides, liquides et gazeux, pouvant fonctionner à co-courant descendant, par exemple dans des réacteurs d'hydrogénation d'une charge hydrocarbonée, par exemple pour l'hydrogénation sélective ou totale de coupes oléfiniques et/ou aromatiques, dans l'hydrotraitement (l'hydrodésulfuration, hydrodéazotation, hydrodématallisation), dans l'hydrocraquage, dans l'hydrodéparaffinage et/ou dans l'isomérisation des paraffines.

Il est en outre proposé un procédé de maintenance d'un réacteur ledit réacteur définissant une entrée de fluide, recevant un lit granulaire et étant équipé d'un plateau de distribution comprenant un élément de plaque entre ladite entrée de fluide et ledit lit granulaire, ledit élément de plaque définissant des orifices pour l'écoulement du fluide vers le lit granulaire, le plateau de distribution étant dimensionné et disposé à l'intérieur du réacteur de sorte que les fluides introduits par ladite entrée de fluide soient contraints de passer par lesdits orifices du plateau pour atteindre ledit lit granulaire, ce procédé comprenant une étape d'installation (ou de retrait), sur (ou du, respectivement) plateau de distribution, d'au moins un dispositif de filtration comprenant au moins un organe de filtration perméable aux fluides et retenant d'éventuelles impuretés.

L'installation peut par exemple être effectuée dans ou autour un jeu d'au moins un orifice correspondant à ce dispositif de filtration.

L'invention est maintenant décrite en référence aux dessins annexés, non limitatifs, dans lesquels :
- la figure 1 représente une vue en coupe et schématique d'un ensemble selon l'art antérieur;
- la figure 2 représente une vue en coupe et schématique d'un exemple d'ensemble selon un mode de réalisation de l'invention ;
- la figure 3A est une vue schématique et en perspective d'un exemple de dispositif de filtration selon un premier mode de réalisation de l'invention, lorsqu'installé sur un plateau de distribution à cheminées partiellement représenté;
- la figure 3B est une vue schématique et en coupe du dispositif de filtration de la figure 3A, lorsqu'installé sur un plateau de distribution à cheminées partiellement représenté;
- La figure 4A est une vue schématique et en perspective d'un exemple de dispositif de filtration selon un deuxième mode de réalisation de l'invention ;
- La figure 4B est une vue de dessous, et schématique ; d'un élément creux d'aval du dispositif de filtration de la figure 4A ;
- La figure 4C est une vue de côté et schématique du dispositif de filtration de la figure 4A, lorsqu'installé sur un plateau de distribution dont une partie seulement a été représentée, et en coupe.

Des références identiques pourront être utilisées d'une figure à l'autre pour désigner des éléments identiques ou similaires.

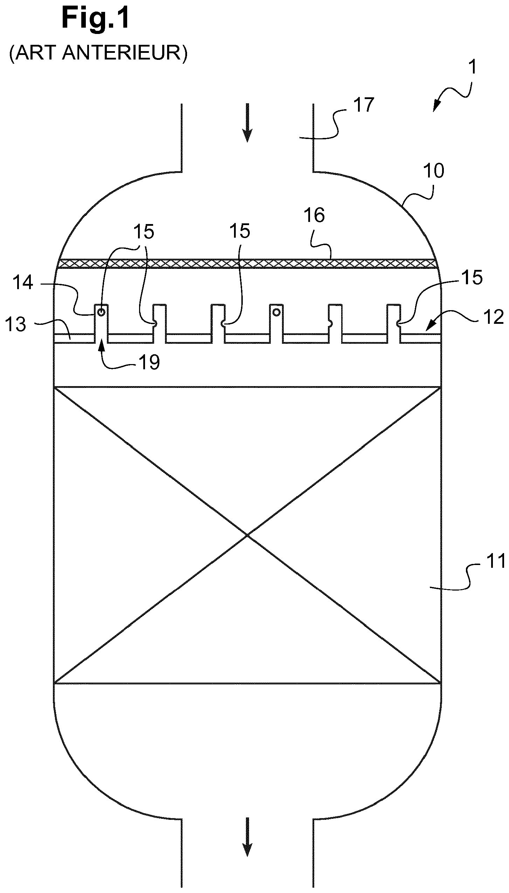

La figure 1 représente un ensemble 1 comprenant un réacteur 10 avec une entrée 17 pour l'introduction d'un gaz et d'un liquide circulants à co-courant descendant.

Le réacteur 10 reçoit un lit catalytique 11. Ce lit catalytique peut par exemple comprendre des particules solides de catalyseur, ayant une granulométrie centrée autour de quelques millimètres par exemple.

Un plateau distributeur 12 est installé en amont du lit catalytique 11. Ce plateau 12 comprend un élément de plaque 13 percé d'orifices 19 surmontés de cheminées creuses 14. Les cheminées 14 ont leurs parois perforées d'ouvertures 15.

Un étage de filtration 16 est prévu en amont du plateau de distribution 12. Cet étage de filtration 16 peut par exemple comprendre un filtre du type décrit dans le document US 3,958,952, fixé aux parois du réacteur 10.

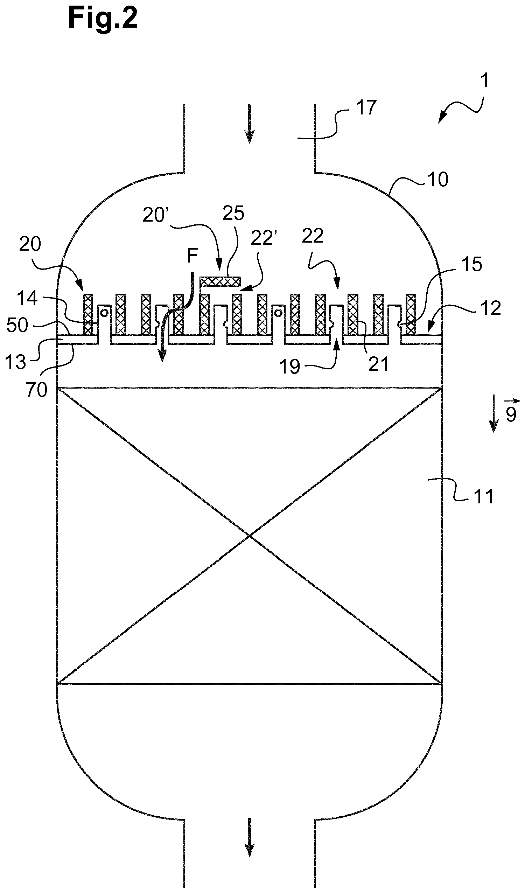

En référence à la figure 2, on a supprimé l'étage de filtration 16. Plusieurs dispositifs de filtration 20 sont installés sur le plateau de distribution 12.

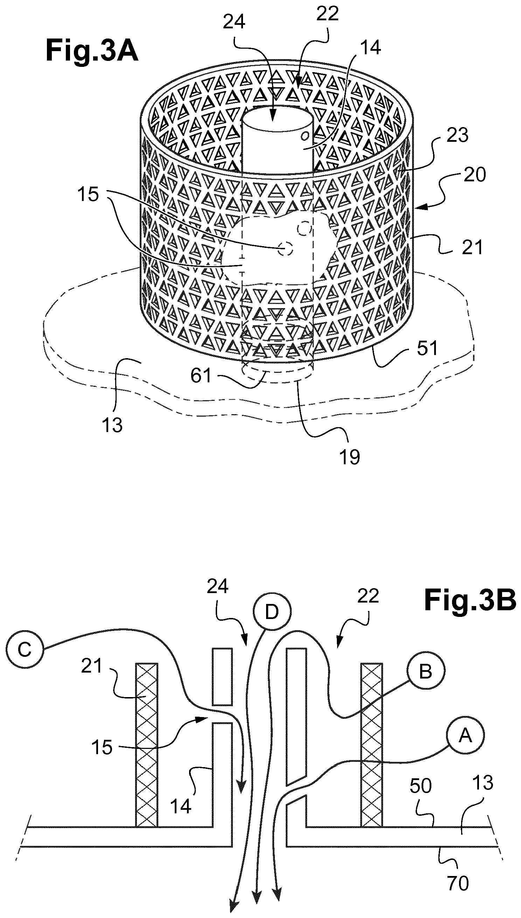

Chaque dispositif de filtration 20 est à forme générale de cylindre, avec dans cet exemple une génératrice normale au plan de la face amont 50, de sorte que la projection (suivant le vecteur gravité correspondant ici au sens global d'écoulement des fluides et à la normale au plan de la face amont) sur cette face amont 50 des parois et la projection sur cette face amont du bord inférieur 51 des parois sont confondues. Ces projections entourent la projection 61 (voir la figure 3A) du bord de l'orifice 19 correspondant à ce dispositif.

Plus précisément, on installe chaque dispositif de filtration 20 autour d'une cheminée 14 correspondante.

Les parois latérales 21 du cylindre sont réalisées en céramique de type nid d'abeilles afin d'assurer une filtration des fluides traversant ses parois 21.

Ainsi les fluides relativement lourds, notamment liquides, introduit par l'entrée 17, auront-ils tendance à emprunter un chemin passant par les parois 21 pour atteindre les orifices 19 comme illustré par la flèche F. On peut relever que sur cette figure, les proportions ne sont pas forcément respectées, et qu'on a dessiné les cheminées relativement proches les unes des autres, mais en réalité, elles peuvent être espacées d'environ une dizaine de centimètres, alors que leur diamètre de section est de l'ordre du centimètre et que les parois 21 peuvent jouxter les cheminées, par exemple être à moins d'un centimètre de la cheminée correspondante.

Les impuretés pourront ainsi sédimenter sur l'élément de plaque 13 ou sur les parois verticales 21.

Lorsque ces parois 21 sont colmatées par les impuretés, les fluides introduits par l'ouverture 17 pourront toujours circuler par les orifices 19 en passant par des ouvertures 22 définies au-dessus des parois 21 des dispositifs de filtration.

Sur la figure 2, on a représenté un dispositif de filtration 20' légèrement différent des autres dispositifs de filtration 20, en ce sens qu'il comporte un couvercle 25 solidarisé aux parois latérales et suffisamment distant de ces parois pour définir une ouverture 22' haute de quelques centimètres.

On pourra relever que dans cet exemple de réalisation, les dispositifs de filtration 20, 20' sont simplement posés sur l'élément de plaque 13.

Dans un mode de réalisation alternatif et non représenté, on pourrait prévoir des éléments de bride s'étendant depuis les parois 21 de façon à recouvrir partiellement l'élément de plaque 13 et servant à la fixation démontable, par exemple par vissage, à l'élément de plaque 13.

Les cheminées 14 s'étendent perpendiculairement à la plaque 13. La plaque 13 pourra comprendre de 10 à 200, de préférence de 40 à 120 orifices 19 par mètre carré.

Chaque orifice 19 de la plaque 13 est surmonté par une cheminée 14 de même section que cet orifice 19. Les cheminées 14 sont situées entièrement au dessus de la plaque 13. On ne sortirait pas du cadre de l'invention si ces cheminées débordaient en-dessous de cette plaque.

Par exemple, les cheminées sont cylindriques, ouvertes ou partiellement fermées à leur extrémité supérieure.

La plaque 13 peut par exemple être réalisée en métal et présenter une épaisseur de quelques centimètres.

Les cheminées peuvent par exemple être fixées à la plaque 13 par soudure.

La figure 3A et la figure 3B sont relatives au dispositif de filtration 20 représenté sur la figure 2.

Ce dispositif de filtration 20 est de conception relativement simple en ce sens qu'il comporte simplement un élément creux d'amont, formé par exemple de paroi(s) filtrante(s) formant un cylindre de base circulaire.

Dans d'autres modes de réalisation non représentés, la base du cylindre peut-être non pas circulaire, mais rectangulaire, elliptique, ou autre.

Dans cet exemple, l'élément creux d'amont est dénué de couvercle, mais on pourrait prévoir, comme représenté sur la figure 2, une paroi filtrante supplémentaire 25 au-dessus des parois du cylindre, s'étendant dans un plan normal à la direction d'écoulement, pour assurer un filtrage des fluides ayant un chemin uniquement vertical jusqu'à la cheminée. Avantageusement, l'élément creux d'amont pourrait définir des ouvertures 22' pour le passage de fluide lorsque toutes ses parois filtrantes sont colmatées : par exemple, la paroi filtrante supplémentaire 25 pourrait être légèrement surélevée par rapport aux parois du cylindre, de façon à définir ainsi des ouvertures entre le bord supérieur du cylindre et cette paroi filtrante supplémentaire.

Pour revenir à la figure 3A, chaque paroi filtrante 21 comprend un maillage en céramique de type nid d'abeilles présentant des orifices 23, ici à forme triangulaire et d'environ 1 mm de côté.

Comme expliqué en référence à la figure 2, les fluides les plus denses et notamment les liquides peuvent préférentiellement circuler via les parois filtrantes 21.

Ainsi, lorsque les dispositifs de filtration 20 viennent d'être installés sur une face amont 50, opposée à une face aval 70, d'un plateau distributeur supposé propre, on peut s'attendre à ce que les fluides les plus lourds circulent essentiellement via les parois filtrantes 21 et via les orifices 15 (chemin A sur la figure 3B).

Si les orifices 15 des cheminées sont colmatés et que les parois 21 restent perméables aux fluides, le chemin B pourra être plus emprunté, ainsi bien sûr que le chemin D passant par les ouvertures 22 du dispositif de filtration et 24 de la cheminée.

Si les parois 21 sont colmatées et que les parois 14 restent perméables aux fluides, le chemin C pourra être plus emprunté, ainsi bien sûr que le chemin D passant par les ouvertures 22 du dispositif de filtration et 24 de la cheminée.

Enfin, lorsque les parois 21 du dispositif de filtration et les parois 14 des cheminées sont imperméables aux fluides, seul le chemin D pourra être emprunté.

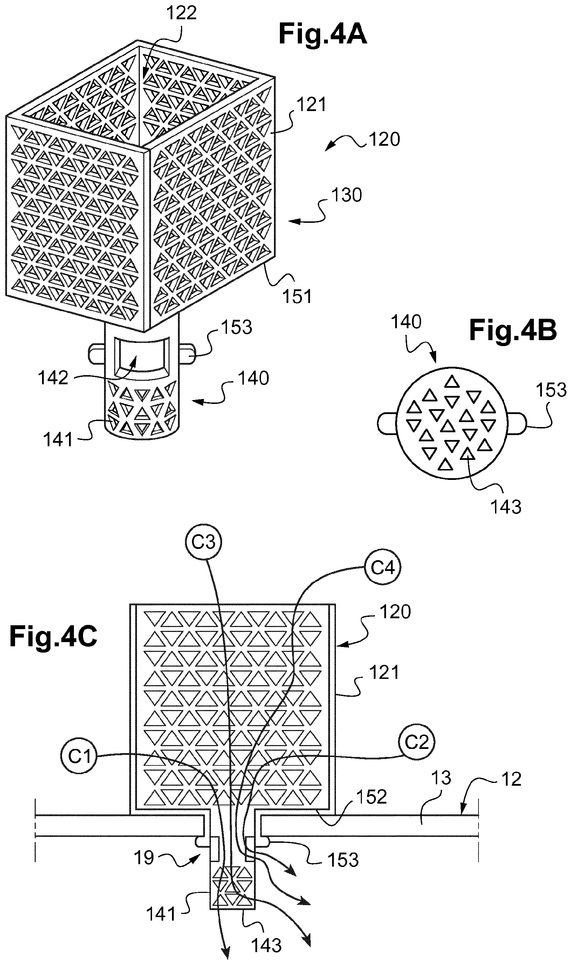

Les figures 4A, 4B, 4C sont relatives à un deuxième mode de réalisation dans lequel le dispositif de filtration 120 comprend un élément creux d'amont 130 et un élément creux d'aval 140 solidarisés l'un à l'autre ou réalisés d'une seule pièce.

L'élément creux d'amont 130 présente une forme cylindrique, par exemple de base carrée, avec une paroi latérale filtrante 121, par exemple sans couvercle et avec un fond 152 s'étendant entre les bords inférieurs 151 des parois 121 et le pourtour supérieur de l'élément creux d'aval 140.

Ce fond 152 peut par exemple être plein.

L'élément creux d'aval 140 est de forme globalement cylindrique, aux oreilles 153 prés, avec une base circulaire présentant un rayon proche du rayon de courbure d'une portion du bord de l'orifice 19.

Plus précisément, on prévoit dans cet exemple un plateau de distribution avec des orifices présentant un bord circulaire sur une grande partie de leur pourtour et présentant deux évidements supplémentaires non représentés, ces évidements supplémentaires ayant sensiblement la forme des oreilles 153. Ainsi l'élément 140 ne peut être introduit que lorsque ses oreilles 153 sont dans l'alignement de ces évidements supplémentaires ; il suffit ensuite d'effectuer un mouvement de rotation autour d'un axe vertical et passant sensiblement par le centre de l'orifice, pour fixer solidement le dispositif de filtration 120.

Les oreilles 153, ou butées, sont réalisées en céramique comme le reste du dispositif 120.

Dans un mode de réalisation alternatif et non représenté, le dispositif de filtration pourrait être dénué de moyen de verrouillage du type oreilles, l'élément creux d'aval cylindrique étant alors simplement inséré dans un orifice correspondant du plateau.

Pour revenir aux figures, outre les oreilles 153, l'élément creux d'aval 140 comprend des parois filtrantes 141, du même type que les parois 121 ou non, ainsi que des évidements 142 aptes à laisser passer les impuretés.

Comme illustré sur la figure 4B, le fond 143 de l'élément d'aval 140 est également filtrant, c'est-à-dire qu'il retient des impuretés. Ce fond 143 est également un maillage du type nid d'abeilles.

Comme illustré sur la figure 4C, des oreilles 153 sont disposées à une hauteur telle qu'elle peuvent être calées contre la face aval de l'élément de plaque 13. Le dispositif de filtration 120 est ainsi retenu grâce à ces oreilles 153 et grâce au fond 152, qui sont de part et d'autre de la plaque 13.

Lorsque le dispositif de filtration 120 et le plateau distributeur 12 sont exempts d'impuretés, les fluides les plus lourds pourront passer par les parois filtrantes 121 de l'élément creux d'amont 130, puis par les parois filtrantes 141 ou le fond 143 de l'élément creux d'aval 140. Ceci est illustré par le chemin C1.

A contrario, lorsque les parois 121, 141, et 143 sont saturées d'impuretés, seul le chemin C4, passant par une ouverture 122 de la partie amont 130 et par les ouvertures 142 de la partie aval 140, pourra être emprunté.

Le chemin C3 constitue un chemin utilisable notamment lorsque les parois 121 sont saturées mais que les parois 141, 143 restent perméables aux fluides.

Enfin le chemin C2 peut être emprunté notamment lorsque la paroi 121 est perméable aux fluides et que les parois 141,143 sont colmatées par les impuretés.

Lorsque les dispositifs de filtration 20,120 sont saturés d'impuretés, leur retrait peut être relativement facile à effectuer. Dans le cas du dispositif 20 correspondant au premier mode de réalisation, il suffit de saisir et de soulever ce dispositif. Le dispositif 120 décrit en référence aux figures 4A, 4B, 4C peut-être retiré en effectuant un mouvement de rotation suivi d'un mouvement de translation vers le haut afin d'assurer un désengagement par rapport au plateau de distribution.

On peut prévoir de réaliser les parois filtrantes verticales 21, 121, 141 des dispositifs de filtration plus hautes que dans les modes de réalisation représentés, afin de prolonger la durée de vie de ces dispositifs.

Selon une variante de réalisation non représentée, un dispositif de filtration peut être dénué d'élément creux d'amont, et comprendre simplement un élément creux d'aval et des moyens de fixation au plateau de distribution, par exemple des oreilles reposant sur la face amont lorsque l'élément creux d'aval, en forme de cylindre est introduit dans un orifice du plateau de distribution.

Dans les modes de réalisation représentés, l'écoulement des fluides introduits dans le réacteur est mené sous l'action de la gravité, mais on pourrait prévoir, selon un mode de réalisation alternatif et non représenté, un sens d'écoulement ayant une composante normale au vecteur gravité. Les formes des filtres gagneraient alors à être adaptées afin de prendre compte les parcours préférentiels des impuretés, notamment des impuretés les plus lourdes.

## Revendications

1. Dispositif de filtration (20) de particules pour un réacteur (10), ledit réacteur définissant une entrée de fluide (17), recevant un lit granulaire (11) et étant équipé d'un plateau de distribution (12) comprenant un élément de plaque (13) avec une face amont (50) en regard de ladite entrée de fluide et une face aval (70) opposée à la face amont, en regard du lit granulaire, ledit élément de plaque définissant des orifices (19) pour l'écoulement du fluide vers le lit granulaire, le plateau de distribution étant dimensionné et disposé à l'intérieur du réacteur de sorte que les fluides introduits par ladite entrée de fluide soient contraints de passer par lesdits orifices du plateau pour atteindre ledit lit granulaire,
le dispositif de filtration comprenant au moins un organe de filtration (21) perméable au fluide tout en retenant d'éventuelles particules entrainées par le fluide,
dans lequel le dispositif de filtration est agencé pour être installé sur le plateau de distribution, de sorte que ledit au moins organe de filtration soit sur un chemin possible (F) d'écoulement de fluide vers ou depuis un jeu correspondant d'au moins un orifice de l'élément de plaque, et
dans lequel ledit dispositif définit au moins une ouverture dimensionnée et disposée de façon à laisser passer le fluide depuis/vers par le jeu d'au moins un orifice correspondant audit dispositif de filtration lorsque ledit dispositif de filtration installé sur le plateau de distribution a son au moins un organe de filtration colmaté par des particules.

2. Dispositif de filtration (20 ; 120) selon la revendication 1, dans lequel ledit dispositif comprend un élément creux d'amont (20 ; 130) comprenant des parois latérales (21 ; 121) intégrant une partie au moins dudit au moins un organe de filtration (21), suffisamment distantes les unes des autres pour que lorsque cet élément creux d'amont est installé sur la face amont (50) de l'élément de plaque (13) du plateau de distribution (12), les projections d'un bord inférieur (51 ; 151) de ces parois latérales sur la face amont de l'élément de plaque entourent les projections sur cette face amont des bords (61) du au moins un orifice du jeu correspondant à ce dispositif de filtration.

3. Dispositif de filtration (120) selon la revendication 1 ou 2, dans lequel ledit dispositif comprend un élément creux d'aval (140), comprenant des parois latérales intégrant une partie au moins (141) dudit au moins un organe de filtration, suffisamment rapprochées pour que cet élément creux d'aval puisse être introduit dans le plateau de distribution via un orifice du jeu d'au moins un orifice correspondant à ce dispositif de filtration.

4. Dispositif de filtration (120) selon la revendication 3, dans lequel l'élément creux d'aval définit au moins une butée (153) formant un détrompeur pour une fixation de type quart de tour.

5. Dispositif de filtration (20 ; 120) selon l'une quelconque des revendications 1 à 4, dans lequel le jeu d'au moins un orifice correspondant audit dispositif de filtration comprend un seul orifice (19).

6. Dispositif de filtration (20 ; 120) selon l'une quelconque des revendications 1 à 5, dans lequel ledit dispositif est au moins en partie réalisé en céramique extrudée.

7. Dispositif de filtration (20 ; 120) selon l'une quelconque des revendications 1 à 6, dans lequel ledit dispositif est au moins en partie réalisé en métal.

8. Dispositif de filtration (20 ; 120) selon l'une quelconque des revendications 1 à 7, dans lequel le jeu d'au moins une ouverture est agencé de sorte que l'aire de la au moins une section d'ouverture correspondante soit au moins aussi élevée que l'aire de la ou des section(s) du jeu d'orifice(s) correspondant à ce dispositif de filtration.

9. Ensemble comprenant un réacteur (10) ledit réacteur définissant une entrée de fluide (17), recevant un lit granulaire (11) et étant équipé d'un plateau de distribution (12) comprenant un élément de plaque (13) entre ladite entrée de fluide et ledit lit granulaire, ledit élément de plaque définissant des orifices (19) pour l'écoulement du fluide vers le lit granulaire, le plateau de distribution étant dimensionné et disposé à l'intérieur du réacteur de sorte que les fluides introduits par ladite entrée de fluide soient contraints de passer par lesdits orifices du plateau pour atteindre ledit lit granulaire, ainsi que le dispositif de filtration selon l'une quelconque des revendications 1 à 8, ledit dispositif étant installé sur le plateau de distribution de sorte que ledit au moins organe de filtration soit sur un chemin possible (F) d'écoulement de fluide vers ou depuis un jeu correspondant d'au moins un orifice de l'élément de plaque.

10. Utilisation du dispositif de filtration selon l'une quelconque des revendications 1 à 8 dans un réacteur à lit(s) catalytique(s) fixe(s) alimentés par des fluides, liquides et gazeux, pouvant fonctionner à co-courant descendant.

11. Procédé de maintenance d'un réacteur, ledit réacteur définissant une entrée de fluide, recevant un lit granulaire et étant équipé d'un plateau de distribution comprenant un élément de plaque entre ladite entrée de fluide et ledit lit granulaire, ledit élément de plaque définissant des orifices pour l'écoulement du fluide vers le lit granulaire, le plateau de distribution étant dimensionné et disposé à l'intérieur du réacteur de sorte que les fluides introduits par ladite entrée de fluide soient contraints de passer par lesdits orifices du plateau pour atteindre ledit lit granulaire, ce procédé comprenant une étape d'installation (ou de retrait), sur (ou du, respectivement) plateau de distribution, d'au moins un dispositif de filtration comprenant au moins un organe de filtration perméable aux fluides et retenant d'éventuelles impuretés, et dans lequel ledit dispositif définit au moins une ouverture dimensionnée et disposée de façon à laisser passer le fluide depuis/vers par le jeu d'au moins un orifice correspondant audit dispositif de filtration lorsque ledit dispositif de filtration installé sur le plateau de distribution a son au moins un organe de filtration colmaté par des particules.

## Patentansprüche

1. Partikelfiltervorrichtung (20) für einen Reaktor (10), wobei der Reaktor einen Fluideinlass (17) definiert, ein körniges Bett (11) aufnimmt und mit einer Verteilerplatte (12) ausgestattet ist, die ein Plattenelement (13) mit einer stromaufwärtigen Seite (50), die dem Fluideinlass zugewandt ist, und einer stromabwärtigen Seite (70), die der stromaufwärtigen Seite gegenüberliegt, gegenüber dem körnigen Bett umfasst, wobei das Plattenelement Löcher (19) für den Fluidstrom in Richtung des körnigen Betts definiert, wobei die Verteilerplatte im Inneren des Reaktors dimensioniert und angeordnet ist, so dass die durch den Fluideinlass eingeführten Fluide dazu veranlasst werden, durch die Löcher der Platte zu strömen, um das körnige Bett zu erreichen,
wobei die Filtervorrichtung mindestens ein Filterelement (21) umfasst, das für das Fluid durchlässig ist und gleichzeitig alle von dem Fluid mitgerissenen Partikel zurückhält,
wobei die Filtervorrichtung angeordnet ist, um auf der Verteilerplatte installiert zu sein, so dass sich mindestens das Filterelement auf einem möglichen Weg (F) des Fluidstroms zu oder von einem entsprechenden Satz von mindestens einem Loch des Plattenelements befindet, und
wobei die Vorrichtung mindestens eine Öffnung definiert, die derart bemessen und angeordnet ist, dass sie das Fluid von/zu dem Satz von mindestens einem Loch, das der Filtervorrichtung entspricht, strömen lässt, wenn die mindestens eine auf der Verteilerplatte installierte Filtervorrichtung mindestens ein Filterelement aufweist, das mit Partikeln verstopft ist.

2. Filtervorrichtung (20; 120) nach Anspruch 1, wobei die Vorrichtung ein stromaufwärtiges Hohlelement (20; 130) umfasst, das Seitenwände (21; 121) umfasst, die mindestens einen Teil des mindestens einen Filterelements (21) integrieren und ausreichend weit voneinander beabstandet sind, so dass, wenn dieses stromaufwärtige Hohlelement auf der stromaufwärtigen Seite (50) des Plattenelements (13) der Verteilerplatte (12) installiert ist, die Vorsprünge einer Unterkante (51; 151) dieser Seitenwände auf der stromaufwärtigen Seite des Plattenelements die Vorsprünge auf dieser stromaufwärtigen Seite der Kanten (61) mindestens eines Lochs des Satzes, das dieser Filtervorrichtung entspricht, umgibt.

3. Filtervorrichtung (120) nach Anspruch 1 oder 2, wobei die Vorrichtung ein stromabwärtiges Hohlelement (140) umfasst, das Seitenwände umfasst, die mindestens einen Teil (141) des mindestens einen Filterelements integrieren und ausreichend nahe beieinander liegen, so dass dieses stromabwärtige Hohlelement über ein Loch des Satzes von mindestens einem Loch, das dieser Filtervorrichtung entspricht, in die Verteilerplatte eingeführt werden kann.

4. Filtervorrichtung (120) nach Anspruch 3, wobei das stromabwärtige Hohlelement mindestens einen Anschlag (153) definiert, der eine Polarisationsvorrichtung vom Typ für eine Vierteldrehungsbefestigung bildet.

5. Filtervorrichtung (20; 120) nach einem der Ansprüche 1 bis 4, wobei der Satz von mindestens einem Loch, das der Filtervorrichtung entspricht, ein einzelnes Loch (19) umfasst.

6. Filtervorrichtung (20; 120) nach einem der Ansprüche 1 bis 5, wobei die Vorrichtung mindestens teilweise aus extrudierter Keramik besteht.

7. Filtervorrichtung (20; 120) nach einem der Ansprüche 1 bis 6, wobei die Vorrichtung mindestens teilweise aus Metall besteht.

8. Filtervorrichtung (20; 120) nach einem der Ansprüche 1 bis 7, wobei der Satz von mindestens einem Loch so angeordnet ist, dass die Fläche des mindestens einen entsprechenden Öffnungsabschnitts mindestens so groß ist wie die Fläche des Abschnitts bzw. der Abschnitte des Satzes von Löchern, die dieser Filtervorrichtung entsprechen.

9. Anordnung, umfassend einen Reaktor (10), wobei der Reaktor einen Fluideinlass (17) definiert, ein körniges Bett (11) aufnimmt und mit einer Verteilerplatte (12) ausgestattet ist, die ein Plattenelement (13) zwischen dem Fluideinlass und dem körnigen Bett umfasst, wobei das Plattenelement Löcher (19) für den Fluidstrom zum körnigen Bett definiert, wobei die Verteilerplatte im Inneren des Reaktors dimensioniert und angeordnet ist, so dass die durch den Fluideinlass eingeführten Fluide dazu veranlasst werden, durch die Löcher der Platte zu strömen, um das körnige Bett zu erreichen, sowie die Filtervorrichtung nach einem der Ansprüche 1 bis 8, wobei die Vorrichtung auf der Verteilerplatte so installiert ist, so dass sich mindestens das Filterelement auf einem möglichen Weg (F) des Fluidstroms zu oder von einem entsprechenden Satz von mindestens einem Loch des Plattenelements befindet.

10. Verwendung der Filtervorrichtung nach einem der Ansprüche 1 bis 8 in einem Reaktor mit einem (oder mehreren) festen Katalysatorbett(en), die mit Fluiden, Flüssigkeiten und Gasen gespeist werden und im absteigendem Gleichstrom betrieben werden können.

11. Wartungsverfahren für einen Reaktor, wobei der Reaktor einen Fluideinlass definiert, ein körniges Bett aufnimmt und mit einer Verteilerplatte ausgestattet ist, die ein Plattenelement zwischen dem Fluideinlass und dem körnigen Bett umfasst, wobei das Plattenelement Löcher für den Fluidstrom zum körnigen Bett definiert, wobei die Verteilerplatte im Inneren des Reaktors dimensioniert und angeordnet ist, so dass die durch den Fluideinlass eingeführten Fluide dazu veranlasst werden, durch die Löcher der Platte zu strömen, um das körnige Bett zu erreichen, wobei dieses Verfahren einen Schritt des Installierens (oder Entfernens) mindestens einer Filtervorrichtung, die mindestens ein Filterelement umfasst, das für das Fluid durchlässig ist und gleichzeitig alle von dem Fluid mitgerissenen Partikel zurückhält, auf (bzw. von) der Verteilerplatte umfasst, und wobei die Vorrichtung mindestens eine Öffnung definiert, die derart bemessen und angeordnet ist, dass sie das Fluid von/zu dem Satz von mindestens einem Loch, das der Filtervorrichtung entspricht, strömen lässt, wenn die auf der Verteilerplatte installierte Filtervorrichtung mindestens ein Filterelement aufweist, das mit Partikeln verstopft ist.

## Claims

1. Device (20) for filtering particles for a reactor (10), said reactor defining a fluid inlet (17), receiving a granular bed (11) and being equipped with a distribution tray (12) comprising a plate element (13) with an upstream face (50) facing said fluid inlet and a downstream face (70) opposite to the upstream face, facing said granular bed, said plate element defining orifices (19) for the flow of the fluid to the granular bed, the distribution tray being sized and disposed inside the reactor so that the fluids introduced through said fluid inlet are forced to pass through said orifices in the tray to reach said granular bed,
the filtration device comprising at least one filtration member (21) permeable to the fluid while retaining therefrom any particles entrained by the fluid,
wherein the filtration device is arranged to be installed on the distribution tray, so that said at least one filtration member is on a possible path (F) of flow of fluid to or from a corresponding set of at least one orifice of the plate element, and
wherein said device defines at least one opening sized and disposed so as to allow the fluid to pass from/to through the set of at least one orifice corresponding to said filtration device when said filtration device installed on the distribution tray has its at least one filtration member blocked by particles.

2. Filtration device (20; 120) according to claim 1, wherein said device comprises an upstream hollow element (20; 130) comprising lateral walls (21; 121) incorporating at least a part of said at least one filtration member (21), sufficiently distant from each other so that, when this upstream hollow element is installed on the upstream face (50) of the plate element (13) of the distribution tray (12), the projections of a bottom edge (51; 151) of these lateral walls on the upstream face of the plate element surround the projections on this upstream face of the edges (61) of the at least one orifice of the set corresponding to this filtration device.

3. Filtration device (120) according to claim 1 or 2, wherein said device comprises a downstream hollow element (140), comprising lateral walls incorporating at least a part (141) of said at least one filtration member, sufficiently close together for this downstream hollow element to be able to be introduced into the distribution tray via an orifice of the set of at least one orifice corresponding to this filtration device.

4. Filtration device (120) according to claim 3, wherein the downstream hollow element defines at least one stop (153) forming a positive locator for a fixing of the quarter-turn type.

5. Filtration device (20; 120) according to any one of claims 1 to 4, wherein the set of at least one orifice corresponding to said filtration device comprises a single orifice (19).

6. Filtration device (20; 120) according to any one of claims 1 to 5, wherein said device is at least partly produced from extruded ceramic.

7. Filtration device (20; 120) according to any one of claims 1 to 6, wherein said device is at least partly produced from metal.

8. Filtration device (20; 120) according to any one of claims 1 to 7, wherein the set of at least one opening is arranged so that the area of the at least one corresponding opening cross section is at least as great as the area of the cross section or cross sections of the set of orifice or orifices corresponding to this filtration device.

9. Assembly comprising a reactor (10), said reactor defining a fluid inlet (17), receiving a granular bed (11) and being equipped with a distribution tray (12) comprising a plate element (13) between said fluid inlet and said granular bed, said plate element defining orifices (19) for flow of the fluid to the granular bed, the distribution tray being sized and disposed inside the reactor so that the fluids introduced through said fluid inlet are forced to pass through said orifices in the tray to reach said granular bed, as well as the filtration device according to any one of claims 1 to 8, said device being installed on the distribution tray so that said at least one filtration member is on a possible path (F) of flow of fluid to or from a corresponding set of at least one orifice of the plate element.

10. Use of the filtration device according to any one of claims 1 to 8 in a reactor with fixed catalytic bed or beds supplied by fluids, liquid or gaseous, able to operate in descending countercurrent.

11. Method for maintaining a reactor, said reactor defining a fluid inlet, receiving a granular bed and being equipped with a distribution tray comprising a plate element between said fluid inlet and said granular bed, said plate element defining orifices for flow of the fluid to the granular bed, the distribution tray being sized and disposed inside the reactor so that the fluids introduced through said fluid inlet are forced to pass through said orifices in the tray to reach said granular bed, this method comprising a step of installing (or removing), on (or from, respectively) the distribution tray, at least one filtration device comprising at least one filtration member permeable to the fluids and retaining any impurities, and wherein said device defines at least one opening sized and disposed so as to allow the fluid to pass from/to through the set of at least one orifice corresponding to said filtration device when said filtration device installed on the distribution tray has its at least one filtration member blocked by particles.
